# EUROPÄISCHE PATENTSCHRIFT

(11) **EP 2 121 838 B1**
(45) Veröffentlichungstag und Bekanntmachung des Hinweises auf die Patenterteilung: **30.06.2010**
(21) Anmeldenummer: 08708852.2
(22) Anmeldetag: 11.02.2008
(51) Int. Cl.: C08L 67/02

(54) **SCHAUMLAGE AUF BASIS EINER BIOLOGISCH ABBAUBAREN POLYESTERMISCHUNG**
FOAM LAYER PRODUCED OF A BIODEGRADABLE POLYESTER MIXTURE
COUCHE DE MOUSSE À BASE D'UN MÉLANGE DE POLYESTERS BIODÉGRADABLES

(30) Priorität: 15.02.2007 EP 07102477
(43) Veröffentlichungstag der Anmeldung: 25.11.2009
(73) Patentinhaber: BASF SE, 67056 Ludwigshafen (DE)
(72) Erfinder: DIETRICH, Björn, 69117 Heidelberg (DE); LONGO, Daniela, 53721 Siegburg (DE); SKUPIN, Gabriel, 67346 Speyer (DE); KRÜCKL, Florian, 68766 Hockenheim (DE)
(86) Internationale Anmeldenummer: PCT/EP2008/051591
(87) Internationale Veröffentlichungsnummer: WO 2008/098888

(56) Entgegenhaltungen:
- WO-A-2006/074815
- US-A1- 2005 154 114
- DATABASE WPI Week 200553 Thomson Scientific, London, GB; AN 2005-515060 XP002498051 & JP 2005 179537 A (FU S Q F) 7. Juli 2005 (2005-07-07) in der Anmeldung erwähnt
- DATABASE WPI Week 200433 Thomson Scientific, London, GB; AN 2004-350782 XP002498050 & JP 2004 067894 A (UNITIKA LTD) 4. März 2004 (2004-03-04) in der Anmeldung erwähnt

## Beschreibung

Die vorliegende Erfindung betrifft Schaumlagen auf Basis einer biologisch abbaubaren Polyestermischung, umfassend
i) 70 bis 5 Gew.-%, bezogen auf das Gesamtgewicht der Komponenten i bis ii, mindestens eines Polyesters auf Basis von aliphatischen und aromatischen Dicarbonsäuren und aliphatischen Dihydroxyverbindung;
ii) 30 bis 95 Gew.-%, bezogen auf das Gesamtgewicht der Komponenten i bis ii, Polylactid (PLA), und;
iii) 0,1 bis 5 Gew.-%, bezogen auf das Gesamtgewicht der Komponenten i bis ii, eines Epoxidgruppen-haltigen Copolymers auf Basis Styrol, Acrylsäureester und/oder Methacrylsäureester; und
iv) 0,5 bis 3 Gew.-% bezogen auf das Gesamtgewicht der Komponenten i) bis ii), eines Nukleierungsmittel, und
v) 0 - 50 % anorganischer oder organischer Füllstoffe.

Weiterhin betrifft die vorliegende Erfindung Verfahren zur Herstellung der genannten Schaumlagen und die Verwendung der Schaumlagen zur Herstellung von Formteilen, Folien sowie Formteilen, Folien enthaltend die genannte Schaumlagen.

Biologisch abbaubare Polyestermischungen mit ähnlicher Zusammensetzung der Komponenten i) bis v) sind bereits in WO 2006/074815 beschrieben. Die Herstellung von Schaumlagen ist jedoch dort nicht erwähnt.

JP 2004-067894 beschreibt Polyestermischungen auf Basis von Polylactid und biologisch abbaubaren, aliphatisch/aromatischen Polyestern. Als Vernetzer wird eine Mischung aus niedermolekularen Acrylaten und insbesondere Peroxiden eingesetzt. Obgleich die Autoren erwähnen, dass sich die Polyestermischungen schäumen lassen, werden keine Schaumlagen hergestellt. Auch wird über die chemische und physikalische Eigenschaften der Schäume nichts ausgeführt.

JP 2005-179537 offenbart Polyestermischungen mit hohem Polylactid-Gehalt und aliphatisch/aromatischen Polyestern auf Basis von Polyethylenterephthalat, die sich nur langsam biologisch abbauen lassen. Den Mischungen wird vor dem Verschäumen kein Vernetzer oder Kompatibilizer zugesetzt. Schaumlagen werden nicht beschrieben.

In WO 99/065977 werden Schaumfolien basierend auf biologisch abbaubaren, aliphatisch/aromatischen Polyestern und Celluloseacetat mittels Kohlendioxid-Direktbegasung hergestellt. Die Folien weisen eine hohe Dichte von größer 200 bis 600 g/l auf.

Die aus dem Stand der Technik bekannten Polyestermischungen sind nur bedingt zur Herstellung von Schaumlagen geeignet. Insbesondere ließen sich bisher keine Schaumlagen geringer Dichte insbesondere kleiner 50 g/l herstellen. Auch wäre es wünschenswert Schaumlagen mit hohem Anteil (größer 70 %) an geschlossenen Zellen bereitzustellen, da diese ein besseres Wärmeisolierverhalten als offenzellige Schäume aufweisen. Schließlich ist es ein Ziel der vorliegenden Erfindung Schaumlagen aus biologisch abbaubaren Polymeren - vorzugsweise aus nachwachsenden Rohstoffen zu entwickeln, die sich ohne Treibmittel wie Kohlenwasserstoff oder fluorierte Kohlenwasserstoffe herstellen lassen. Die Verwendung von inerten Treibmitten, wie Stickstoff und insbesondere Kohlendioxid hat neben ökologischen Aspekten den Vorteil, dass die so hergestellten Schaumlagen für den Nahrungsmittelsektor zugelassen sind.

Der vorliegenden Erfindung liegt somit die Aufgabe zugrunde, Schaumlagen aus biologisch abbaubaren Materialien zur Verfügung zu stellen, die die obengenanten Nachteile nicht aufweisen.

Überraschenderweise wurde nun gefunden, dass Polyestermischungen, umfassend
i) 70 bis 5 Gew.-%, bezogen auf das Gesamtgewicht der Komponenten i bis ii, mindestens eines Polyesters auf Basis von aliphatischen und aromatischen Dicarbonsäuren und aliphatischen Dihydroxyverbindung;
ii) 30 bis 95 Gew.-%, bezogen auf das Gesamtgewicht der Komponenten i bis ii, Polylactid (PLA), und;
iii) 0,1 bis 5 Gew.-%, bezogen auf das Gesamtgewicht der Komponenten i bis ii, eines Epoxidgruppen-haltigen Copolymers auf Basis Styrol, Acrylsäureester und/oder Methacrylsäureester; und
iv) 0,5 bis 3 Gew.-% bezogen auf des Gesamtgewicht der Komponenten i) bis ii), eines Nukleierungsmittel und
iv) 0 - 50 % anorganische oder organische Füllstoffe wie Polymere aus nachwachsenden Rohstoffen, z.B.: Stärke, Cellulose, Cerealien, Polyhydroxyalkanoate oder Polycaprolacton oder aliphatische Polyester,
sich mit Treibmitteln wie Kohlendioxid oder Stickstoff zu Schaumlagen mit niedriger Dichte und hohem Anteil an geschlossenen Zellen verarbeiten lassen.

Die erfindungsgemäßen Schaumlagen unterscheiden sich von denjenigen des Standes der Technik insbesondere durch die verwendeten Polyestermischungen insbesondere durch den Kompatibilizer (Komponente iii).

Prinzipiell kommen für die Herstellung der erfindungsgemäßen biologisch abbaubaren Polyestermischungen als Komponente i alle Polyester auf Basis von aliphatischen und aromatischen Dicarbonsäuren und aliphatischen Dihydroxyverbindung, sogenannte teilaromatische Polyester, in Betracht. Selbstverständlich sind auch Mischungen mehrerer solcher Polyester als Komponente i geeignet.

Unter teilaromatischen Polyestern sollen erfindungsgemäß auch Polyesterderivate verstanden werden wie Polyetherester, Polyesteramide oder Polyetheresteramide. Zu den geeigneten teilaromatischen Polyestern gehören lineare nicht kettenverlängerte Polyester (WO 92/09654). Bevorzugt werden kettenverlängerte und/oder verzweigte teilaromatische Polyester. Letztere sind aus den eingangs genannten Schriften,
WO 96/15173 bis 15176, 21689 bis 21692, 25446, 25448 oder der WO 98/12242, bekannt, auf die ausdrücklich Bezug genommen wird. Mischungen unterschiedlicher teilaromatischer Polyester kommen ebenso in Betracht. Insbesondere sind unter teilaromatischen Polyestern Produkte wie Ecoflex®(BASF Aktiengesellschaft), Eastar® Bio und Origo-Bi (Novamont) zu verstehen.

Zu den besonders bevorzugten teilaromatischen Polyestern zählen Polyester, die als wesentliche Komponenten
A) eine Säurekomponente aus
   a1) 30 bis 99 mol-% mindestens einer aliphatischen oder mindestens einer cycloaliphatischen Dicarbonsäure oder deren esterbildende Derivate oder Mischungen davon
   a2) 1 bis 70 mol-% mindestens einer aromatischen Dicarbonsäure oder deren esterbildendem Derivat oder Mischungen davon und
   a3) 0 bis 5 mol-% einer sulfonatgruppenhaltigen Verbindung,
B) eine Diolkomponente ausgewählt aus mindestens einem C₂-bis C₁₂-Alkandiol und mindestens einem C₅- bis C₁₀-Cycloalkandiol oder Mischungen davon und gewünschtenfalls darüber hinaus eine oder mehrere Komponenten ausgewählt aus
C) einer Komponente ausgewählt aus
   c1) mindestens einer Etherfunktionen enthaltenden Dihydroxyverbindung der Formel I

      HO-[(CH₂)ₙ-O]ₘ-H (I)

      in der n für 2, 3 oder 4 und m für eine ganze Zahl von 2 bis 250 stehen
   c2) mindestens einer Hydroxycarbonsäure oder Formel IIa oder IIb 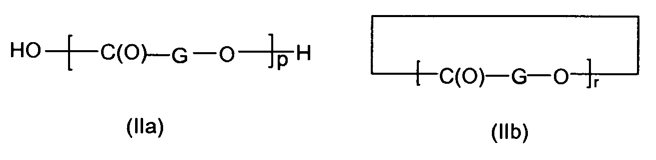 in der p eine ganze Zahl von 1 bis 1500 und r eine ganze Zahl von 1 bis 4 bedeuten, und G für einen Rest steht, der ausgewählt ist aus der Gruppe bestehend aus Phenylen, -(CH₂)_{q}-, wobei q eine ganze Zahl von 1 bis 5 bedeutet, -C(R)H- und -C(R)HCH₂, wobei R für Methyl oder Ethyl steht
   c3) mindestens einem Amino-C₂- bis C₁₂-alkanol oder mindestens einem Amino-C₅-bis C₁₀-cycloalkanol oder Mischungen davon
   c4) mindestens einem Diamino-C₁-bis C₈-Alkan
   c5) mindestens einem 2,2'-Bisoxazolins der allgemeinen Formel III 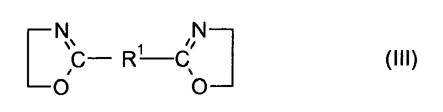 wobei R¹ eine Einfachbindung, eine (CH₂)_{z}-Alkylengruppe, mit z = 2, 3 oder 4, oder eine Phenylengruppe bedeutet
   c6) mindestens einer Aminocarbonsäure ausgewählt aus der Gruppe, bestehend aus den natürlichen Aminosäuren, Polyamiden, erhältlich durch Polykondensation einer Dicarbonsäure mit 4 bis 6 C-Atomen und einem Diamin mit 4 bis 10 C-Atomen, Verbindungen der Formeln IV a und IV b 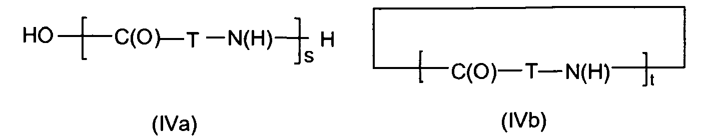 in der s eine ganze Zahl von 1 bis 1500 und t eine ganze Zahl von 1 bis 4 bedeuten, und T für einen Rest steht, der ausgewählt ist aus der Gruppe bestehend aus Phenylen, -(CH₂)ᵤ-, wobei u eine ganze Zahl von 1 bis 12 bedeutet, -C(R²)H- und -C(R²)HCH₂, wobei R² für Methyl oder Ethyl steht,
      und Polyoxazolinen mit der wiederkehrenden Einheit V 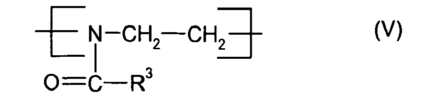 in der R³ für Wasserstoff, C₁-C₆-Alkyl, C₅-C₈-Cycloalkyl, unsubstituierten oder mit C₁-C₄-Alkylgruppen bis zu dreifach substituiertes Phenyl oder für Tetrahydrofuryl steht,
      oder Mischungen aus c1 bis c6
      und
D) einer Komponente ausgewählt aus
   d1) mindestens einer Verbindung mit mindestens drei zur Esterbildung befähigten Gruppen,
   d2) mindestens eines Isocyanates
   d3) mindestens eines Divinylethers
oder Mischungen aus d1) bis d3) enthalten.

Die Säurekomponente A der teilaromatischen Polyester enthält in einer bevorzugten Ausführungsform von 30 bis 70, insbesondere von 40 bis 60 mol-% a1 und von 30 bis 70, insbesondere von 40 bis 60 mol-% a2.

Als aliphatische Säuren und die entsprechenden Derivate a1 kommen im allgemeinen solche mit 2 bis 10 Kohlenstoffatomen, vorzugsweise 4 bis 6 Kohlenstoffatomen, in Betracht. Sie können sowohl linear als auch verzweigt sein. Die im Rahmen der vorliegenden Erfindung verwendbaren cycloaliphatischen Dicarbonsäuren sind in der Regel solche mit 7 bis 10 Kohlenstoffatomen und insbesondere solche mit 8 Kohlenstoffatomen. Prinzipiell können jedoch auch Dicarbonsäuren mit einer größeren Anzahl an Kohlenstoffatomen, beispielsweise mit bis zu 30 Kohlenstoffatomen, eingesetzt werden.

Beispielhaft zu nennen sind: Malonsäure, Bernsteinsäure, Glutarsäure, 2-Methylglutarsäure, 3-Methylglutarsäure, Adipinsäure, Pimelinsäure, Acelainsäure, Sebacinsäure, Fumarsäure, 2,2-Dimethylglutarsäure, Suberinsäure, 1,3-Cyclopentandicarbonsäure, 1,4-Cyclohexandicarbonsäure, 1,3-Cyclohexandicarbonsäure, Diglykolsäure, Itaconsäure, Maleinsäure, Brassylsäure und 2,5-Norbornandicarbonsäure.

Als esterbildende Derivate der oben genannten aliphatischen oder cycloaliphatischen Dicarbonsäuren, die ebenso verwendbar sind, sind insbesondere die Di-C₁- bis C₆-Alkylester, wie Dimethyl-, Diethyl-, Di-n-propyl, Di-isopropyl, Di-n-butyl, Di-iso-butyl, Di-t-butyl, Di-n-pentyl-, Di-iso-pentyl oder Di-n-hexylester zu nennen. Anhydride der Dicarbonsäuren können ebenfalls eingesetzt werden.

Dabei können die Dicarbonsäuren oder deren esterbildenden Derivate, einzeln oder als Gemisch aus zwei oder mehr davon eingesetzt werden.

Bevorzugt werden Bernsteinsäure, Adipinsäure, Azelainsäure, Sebacinsaüre, Brassylsäure oder deren jeweilige esterbildenden Derivate oder Mischungen davon eingesetzt. Besonders bevorzugt wird Bernsteinsäure, Adipinsäure oder Sebacinsäure oder deren jeweilige esterbildenden Derivate oder Mischungen davon eingesetzt. Besonders bevorzugt wird Adipinsäure oder deren esterbildende Derivate, wie deren Alkylester oder deren Mischungen eingesetzt. Als aliphatische Dicarbonsäure werden Sebacinsäure oder Mischungen von Sebacinsäure mit Adipinsäure bevorzugt eingesetzt, wenn Polymermischungen mit "harten" bzw. "spröden" Komponenten ii) wie beispielsweise Polyhydroxybutyrat oder insbesondere Polylactid hergestellt werden. Als aliphatische Dicarbonsäure werden Bernsteinsäure oder Mischungen von Bernsteinsäure mit Adipinsäure bevorzugt eingesetzt, wenn Polymermischungen mit "weichen" bzw. "zähen" Komponenten ii) wie beispielsweise Polyhydroxybuyratcovaleriat hergestellt werden.

Bernsteinsäure, Azelainsäure, Sebacinsäure und Brassylsäure haben zudem den Vorteil dass sie als nachwachsende Rohstoffe zugänglich sind.

Als aromatische Dicarbonsäure a2 sind im allgemeinen solche mit 8 bis 12 Kohlenstoffatomen und vorzugsweise solche mit 8 Kohlenstoffatomen zu nennen. Beispielhaft erwähnt seien Terephthalsäure, Isophthalsäure, 2,6-Naphthoesäure und 1,5-Naphthoesäure sowie esterbildende Derivate davon. Dabei sind insbesondere die Di-C₁-C₆-Alkylester, z.B. Dimethyl-, Diethyl-, Di-n-propyl-, Di-iso-propyl, Di-n-butyl-, Di-iso-butyl, Di-t-butyl, Di-n-pentyl-, Di-iso-pentyl oder Di-n-hexylester zu nennen. Die Anhydride der Dicarbonsäuren a2 sind ebenso geeignete esterbildende Derivate. Prinzipiell können jedoch auch aromatische Dicarbonsäuren a2 mit einer größeren Anzahl an Kohlenstoffatomen, beispielsweise bis zu 20 Kohlenstoffatomen, eingesetzt werden.

Die aromatischen Dicarbonsäuren oder deren esterbildende Derivate a2 können einzeln oder als Gemisch aus zwei oder mehr davon eingesetzt werden. Besonders bevorzugt wird Terephthalsäure oder deren esterbildende Derivate wie Dimethylterephthalat, verwendet.

Als sulfonatgruppenhaltige Verbindung setzt man üblicherweise ein Alkali- oder Erdalkalimetallsalz einer sulfonatgruppenhaltigen Dicarbonsäure oder deren esterbildende Derivate ein, bevorzugt Alkalimetallsalze der 5-Sulphoisophthalsäure oder deren Mischungen, besonders bevorzugt das Natriumsalz.

Nach einer der bevorzugten Ausführungsformen enthält die Säurekomponente A von 40 bis 60 mol-% a1, von 40 bis 60 mol-% a2 und von 0 bis 2 mol-% a3. Nach einer weiteren bevorzugten Ausführungsform enthält die Säurekomponente A von 40 bis 59,9 mol-% a1, von 40 bis 59,9 mol-% a2 und von 0,1 bis 1 mol-% a3, insbesondere von 40 bis 59,8 mol-% a1, von 40 bis 59,8 mol-% a2 und von 0,2 bis 0,5 mol-% a3.

Im allgemeinen werden die Diole B unter verzweigten oder linearen Alkandiolen mit 2 bis 12 Kohlenstoffatomen, bevorzugt 4 bis 6 Kohlenstoffatomen, oder Cycloalkandiolen mit 5 bis 10 Kohlenstoffatomen ausgewählt.

Beispiele geeigneter Alkandiole sind Ethylenglykol, 1,2-Propandiol, 1,3-Propandiol, 1,2-Butandiol, 1,4-Butandiol, 1,5-Pentandiol, 2,4-Dimethyl-2-ethylhexan-1,3-diol, 2,2-Dimethyl- 1,3-propandiol, 2-Ethyl-2-butyl-1,3-propandiol, 2-Ethyl-2-isobutyl- 1,3-propandiol, 2,2,4-Trimethyl-1,6-hexandiol, insbesondere Ethylenglykol, 1,3-Propandiol, 1,4-Butandiol und 2,2-Dimethyl- 1,3-propandiol (Neopentylglykol); Cyclopentandiol, 1,4-Cyclohexandiol, 1,2-Cyclohexandimethanol, 1,3-Cyclohexandimethanol, 1,4-Cyclohexandimethanol oder 2,2,4,4-Tetramethyl-1,3-cyclobutandiol. Besonders bevorzugt sind 1,4-Butandiol, insbesondere in Kombination mit Adipinsäure als Komponente a1) und 1,3- Propandiol, insbesondere in Kombination mit Sebacinsäure als Komponente a1). 1,3- Propandiol hat zudem den Vorteil, dass es als nachwachsender Rohstoff zugänglich ist. Es können auch Mischungen unterschiedlicher Alkandiole verwendet werden.

Abhängig davon ob ein Überschuss an Säure- oder OH-Endgruppen gewünscht wird, kann entweder die Komponente A oder die Komponente B im Überschuss eingesetzt werden. Nach einer bevorzugten Ausführungsform kann das Molverhältnis der eingesetzten Komponenten A zu B im Bereich von 0,4:1 bis 1,5:1, bevorzugt im Bereich von 0,6:1 bis 1,1:1 liegen.

Neben den Komponenten A und B können die Polyester, auf denen die erfindungsgemäßen Polyestermischungen basieren, weitere Komponenten enthalten.

Als Dihydroxyverbindungen c1 setzt man bevorzugt Diethylenglykol, Triethylenglykol, Polyethylenglykol, Polypropylenglykol und Polytetrahydrofuran (Poly-THF), besonders bevorzugt Diethylenglykol, Triethylenglykol und Polyethylenglykol, ein, wobei man auch Mischungen davon oder Verbindungen, die unterschiedliche Variablen n aufweisen (siehe Formel I), beispielsweise Polyethylenglykol, das Propyleneinheiten (n = 3) enthält, beispielsweise erhältlich durch Polymerisation nach an sich bekannten Methoden von zuerst Ethylenoxid und anschließend mit Propylenoxid, besonders bevorzugt ein Polymer auf Basis von Polyethylenglykol, mit unterschiedlichen Variablen n, wobei Einheiten gebildet aus Ethylenoxid überwiegen. Das Molekulargewicht (Mₙ) des Polyethylenglykols wählt man in der Regel im Bereich von 250 bis 8000, bevorzugt von 600 bis 3000 g/mol.

Nach einer der bevorzugten Ausführungsformen können beispielsweise von 15 bis 98, bevorzugt 60 bis 99,5 mol-% der Diole B und 0,2 bis 85, bevorzugt 0,5 bis 30 mol-% der Dihydroxyverbindungen c1, bezogen auf die molare Menge von B und c1, für die Herstellung der teilaromatischen Polyester verwendet werden.

In einer bevorzugten Ausführungsform setzt man als Hydroxycarbonsäure c2) ein: Glykolsäure, D-, L-, D,L-Milchsäure, 6-Hydroxyhexansäure, deren cyclische Derivate wie Glycolid (1,4-Dioxan-2,5-dion), D-, L-Dilactid (3,6-dimethyl-1,4-dioxan-2,5-dion), p-Hydroxybenzoesäure sowie deren Oligomere und Polymere wie 3-Polyhydroxybuttersäure, Polyhydroxyvaleriansäure, Polylactid (beispielsweise als NatureWorks® 4042D (Fa. NatureWorks) erhältlich) sowie eine Mischung aus 3- Polyhydroxybuttersäure und Polyhydroxy-valeriansäure (erhältlich von den Firmen PHB Industrial, Tianan oder Metabolix), besonders bevorzugt für die Herstellung von teilaromatischen Polyestern sind die niedermolekularen und cyclischen Derivate davon.

Die Hydroxycarbonsäuren können beispielsweise in Mengen von 0,01 bis 50, bevorzugt von 0,1 bis 40 Gew.-% bezogen auf die Menge an A und B verwendet werden.

Als Amino-C₂-C₁₂-alkanol oder Amino-C₅-C₁₀-cyloalkanol (Komponente c3), wobei hierunter auch 4-Aminomethylcyclohexanmethanol fallen soll, setzt man bevorzugt Amino-C₂-C₆-alkanole wie 2-Aminoethanol, 3-Aminopropanol, 4-Aminobutanol, 5-Aminopentanol, 6-Aminohexanol sowie Amino-C₅-C₆-cyloalkanole wie Aminocyclopentanol und Aminocyclohexanol oder Mischungen davon ein.

Als Diamino-C₁-C₈-alkan (Komponente c4) setzt man bevorzugt Diamino-C₄-C₆-alkane ein wie 1,4-Diaminobutan, 1,5-Diaminopentan und 1,6-Diaminohexan (Hexamethylendiamin, "HMD").

Nach einer bevorzugten Ausführungsform kann von 0,5 bis 99,5 mol-%, bevorzugt 0,5 bis 50 mol-%, c3, bezogen auf die Molmenge von B, und von 0 bis 50, bevorzugt von 0 bis 35 mol-%, c4, bezogen auf die Molmenge von B, für die Herstellung der teilaromatischen Polyester eingesetzt werden.

Die 2,2'-Bisoxazoline c5 der allgemeinen Formel III sind im allgemeinen erhältlich durch das Verfahren aus Angew. Chem. Int. Edit., Vol. 11 (1972), S. 287-288. Besonders bevorzugte Bisoxazoline sind solche, in denen R¹ eine Einfachbindung, eine (CH₂)_{z}-Alkylengruppe, mit z = 2,3 oder 4 wie Methylen, Ethan-1,2-diyl, Propan-1,3-diyl, Propan-1,2-diyl, oder eine Phenylengruppe bedeutet. Als besonders bevorzugte Bisoxazoline seien 2,2'-Bis(2-oxazolin), Bis(2-oxazolinyl)methan, 1,2-Bis(2-oxazolinyl)ethan, 1,3-Bis(2-oxazolinyl)propan oder 1,4-Bis(2-oxazolinyl)butan, insbesondere 1,4-Bis(2-oxazolinyl)benzol, 1,2-Bis(2-oxazolinyl)benzol oder 1,3-Bis(2-oxazolinyl)benzol genannt.

Zur Herstellung der teilaromatischen Polyester können beispielsweise von 70 bis 98 mol-% B, bis 30 mol-% c3 und 0,5 bis 30 mol-% c4 und 0,5 bis 30 mol-% c5, jeweils bezogen auf die Summe der Molmengen der Komponenten B, c3, c4 und c5, verwendet werden. Nach einer anderen bevorzugten Ausführungsform ist es möglich von 0,1 bis 5, bevorzugt 0,2 bis 4 Gew.-% c5, bezogen auf das Gesamtgewicht von A und B, einzusetzen.

Als Komponente c6 können natürliche Aminocarbonsäuren verwendet werden. Zu diesen zählen Valin, Leucin, Isoleucin, Threonin, Methionin, Phenylalanin, Tryptophan, Lysin, Alanin, Arginin, Aspartamsäure, Cystein, Glutaminsäure, Glycin, Histidin, Prolin, Serin, Tryosin, Asparagin oder Glutamin.

Bevorzugte Aminocarbonsäuren der allgemeinen Formeln IVa und IVb sind die, worin s eine ganze Zahl von 1 bis 1000 und t eine ganze Zahl von 1 bis 4, bevorzugt 1 oder 2 bedeuten und T ausgewählt ist aus der Gruppe Phenylen und -(CH₂)ᵤ-, wobei u 1, 5 oder 12 bedeutet.

Ferner kann c6 auch ein Polyoxazolin der allgemeinen Formel V sein. C6 kann aber auch eine Mischung unterschiedlicher Aminocarbonsäuren und/oder Polyoxazoline sein.

Nach einer bevorzugten Ausführungsform kann c6 in Mengen von 0,01 bis 50, bevorzugt von 0,1 bis 40 Gew.-%, bezogen auf die Gesamtmenge der Komponenten A und B, eingesetzt werden.

Als weitere Komponenten, die optional zur Herstellung der teilaromatischen Polyester eingesetzt werden können, zählen Verbindungen d1, die mindestens drei zur Esterbildung befähigte Gruppen enthalten.

Die Verbindungen d1 enthalten bevorzugt drei bis zehn funktionelle Gruppen, welche zur Ausbildung von Esterbindungen fähig sind. Besonders bevorzugte Verbindungen d1 haben drei bis sechs funktionelle Gruppen dieser Art im Molekül, insbesondere drei bis sechs Hydroxylgruppen und/oder Carboxylgruppen. Beispielhaft seien genannt:
Weinsäure, Zitronensäure, Äpfelsäure;
Trimethylolpropan, Trimethylolethan;
Pentaerythrit;
Polyethertriole;
Glycerin;
Trimesinsäure;
Trimellitsäure, -anhydrid;
Pyromellitsäure, -dianhydrid und
Hydroxyisophthalsäure.

Die Verbindungen d1 werden in der Regel in Mengen von 0,01 bis 15, bevorzugt 0,05 bis 10, besonders bevorzugt 0,1 bis 4 mol-%, bezogen auf die Komponente A eingesetzt.

Als Komponente d2 werden ein oder eine Mischung unterschiedlicher Isocyanate eingesetzt. Es können aromatische oder aliphatische Diisocyanate eingesetzt werden. Es können aber auch höher funktionelle Isocyanate verwendet werden.

Unter einem aromatischen Diisocyanat d2 werden im Rahmen der vorliegenden Erfindung vor allem

Toluylen-2,4-diisocyanat, Toluylen-2,6-diisocyanat, 2,2'-Diphenylmethandiisocyanat, 2,4'-Diphenylmethandiisocyanat, 4,4'-Diphenylmethandiisocyanat, Naphthylen-1,5-diisocyanat oder Xylylen-diisocyanat verstanden. Beispielsweise können die unter dem Namen Basonat® erhältlichen Isocyanate der Fa. BASF Aktiengesellschaft eingesetzt werden.

Darunter werden 2,2'-, 2,4'- sowie 4,4'-Diphenylmethandiisocyanat als Komponente d2 besonders bevorzugt. Im Allgemeinen werden letztere Diisocyanate als Mischung eingesetzt.

Als dreikerniges Isocyanat d2 kommt auch Tri(4-isocyanophenyl)methan in Betracht. Die mehrkernigen aromatischen Diisocyanate fallen beispielsweise bei der Herstellung von ein- oder zweikernigen Diisocyanaten an.

In untergeordneten Mengen, z.B. bis zu 5 Gew.-%, bezogen auf das Gesamtgewicht der Komponente d2, kann die Komponente d2 auch Urethiongruppen, beispielsweise zum Verkappen der Isocyanatgruppen, enthalten.

Unter einem aliphatischen Diisocyanat d2 werden im Rahmen der vorliegenden Erfindung vor allem lineare oder verzweigte Alkylendiisocyanate oder Cycloalkylendiisocyanate mit 2 bis 20 Kohlenstoffatomen, bevorzugt 3 bis 12 Kohlenstoffatomen, z.B. 1,6-Hexamethylendiisocyanat, Isophorondiisocyanat oder Methylen-bis(4-isocyanatocyclohexan), verstanden. Besonders bevorzugte aliphatische Diisocyanate d2 sind 1,6-Hexamethylendiisocyanat und Isophorondiisocyanat.

Zu den bevorzugten Isocyanuraten zählen die aliphatischen Isocyanurate, die sich von Alkylendiisocyanaten oder Cycloalkylendiisocyanaten mit 2 bis 20 Kohlenstoffatomen, bevorzugt 3 bis 12 Kohlenstoffatomen, z.B. Isophorondiisocyanat oder Methylen-bis(4-isocyanatocyclohexan), ableiten. Dabei können die Alkylendiisocyanate sowohl linear als auch verzweigt sein. Besonders bevorzugt werden Isocyanurate, die auf n-Hexamethylendiisocyanat basieren, beispielsweise cyclische Trimere, Pentamere oder höhere Oligomere des n-Hexamethylendiisocyanats.

Im allgemeinen wird die Komponente d2 in Mengen von 0,01 bis 5, bevorzugt 0,05 bis 4 mol-%, besonders bevorzugt 0,1 bis 4 mol-% bezogen auf die Summe der Molmengen von A und B verwendet.

Als Divinylether d3 kann man im allgemeinen alle üblichen und kommerziell erhältlichen Divinylether einsetzen. Bevorzugt verwendet werden 1,4-Butandiol-divinylether, 1,6-Hexandiol-divinylether oder 1,4-Cyclohexandimethanol-divinylether oder Mischungen davon.

Bevorzugt werden die Divinylether in Mengen von 0,01 bis 5, insbesondere von 0,2 bis 4 Gew.-%, bezogen auf das Gesamtgewicht von A und B, eingesetzt.

Beispiele bevorzugter teilaromatischer Polyester basieren auf den folgenden Komponenten
A, B, d1
A, B, d2
A,B,d1,d2
A, B, d3
A, B, c1
A, B, c1, d3
A, B, c3, c4
A, B, c3, c4, c5
A, B, d 1, c3, c5
A, B, c3, d3
A, B, c3, d1
A, B, c1, c3, d3
A, B, c2

Darunter sind teilaromatische Polyester, die auf A, B, d1 oder A, B, d2 oder auf A, B, d1, d2 basieren besonders bevorzugt. Nach einer anderen bevorzugten Ausführungsform basieren die teilaromatischen Polyester auf A, B, c3, c4, c5 oder A, B, d1, c3, c5.

Die genannten teilaromatischen Polyester und die erfindungsgemäßen Polyestermischungen sind in der Regel biologisch abbaubar.

Im Sinne der vorliegenden Erfindung ist das Merkmal "biologisch abbaubar" für einen Stoff oder ein Stoffgemisch dann erfüllt, wenn dieser Stoff oder das Stoffgemisch in mindestens einem der drei in DIN V 54900-2 (Vornorm, Stand September 1998) definierten Verfahren einen prozentualen Grad des biologischen Abbaus von mindestens 60% aufweist.

Im Allgemeinen führt die biologische Abbaubarkeit dazu, dass die Polyester-(mischungen) in einer angemessenen und nachweisbaren Zeitspanne zerfallen. Der Abbau kann enzymatisch, hydrolytisch, oxidativ und/oder durch Einwirkung elektromagnetischer Strahlung, beispielsweise UV-Strahlung, erfolgen und meist zum überwiegenden Teil durch die Einwirkung von Mikroorganismen wie Bakterien, Hefen, Pilzen und Algen bewirkt werden. Die biologische Abbaubarkeit lässt sich beispielsweise dadurch quantifizieren, dass Polyester mit Kompost gemischt und für eine bestimmte Zeit gelagert werden. Beispielsweise wird gemäß DIN EN 13432 oder DIN V 54900-2, Verfahren 3, CO₂-freie Luft durch gereiften Kompost während des Kompostierens strömen gelassen und dieser einem definierten Temperaturprogramm unterworfen. Hierbei wird die biologische Abbaubarkeit über das Verhältnis der Netto-CO₂-Freisetzung der Probe (nach Abzug der CO₂-Freisetzung durch den Kompost ohne Probe) zur maximalen CO₂-Freisetzung der Probe (berechnet aus dem Kohlenstoffgehalt der Probe) als prozentualer Grad des biologischen Abbaus definiert. Biologisch abbaubare Polyester(mischungen) zeigen in der Regel schon nach wenigen Tagen der Kompostierung deutliche Abbauerscheinungen wie Pilzbewuchs, Riss- und Lochbildung.

Andere Methoden zur Bestimmung der Bioabbaubarkeit werden beispielsweise in ASTM D 5338 und ASTM D 6400 beschrieben.

Die Herstellung der teilaromatischen Polyester ist an sich bekannt oder kann nach an sich bekannten Methoden erfolgen.

Die bevorzugten teilaromatischen Polyester sind charakterisiert durch ein Molekulargewicht (Mₙ) im Bereich von 1000 bis 100000, insbesondere im Bereich von 9000 bis 75000 g/mol, bevorzugt im Bereich von 10000 bis 50000 g/mol und einem Schmelzpunkt im Bereich von 60 bis 170, bevorzugt im Bereich von 80 bis 150°C.

Die genannten teilaromatischen Polyester können Hydroxy- und/oder Carboxylendgruppen in jedem beliebigen Verhältnis aufweisen. Die genannten teilaromatischen Polyester können auch endgruppenmodifiziert werden. So können beispielsweise OH-Endgruppen durch Umsetzung mit Phthalsäure, Phthalsäureanhydrid, Trimellithsäure, Trimellithsäureanhydrid, Pyromellithsäure oder Pyromellithsäureanhydrid säuremodifiziert werden.

Als Komponenten ii der biologisch abbaubaren Polyestermischungen ist Polylactid mit dem folgenden Eigenschaftsprofil bevorzugt:
- einer Schmelzvolumenrate (MVR bei 190°C und 2.16 kg nach ISO 1133 von 0.5 - vorzugsweise 2 - bis 9 ml/10 Minuten
- einem Schmelzpunkt unter 175°C;
- einem Glaspunkt (Tg) größer 55°C
- einem Wassergehalt von kleiner 1000 ppm
- einem Monomeren-Restgehalt (L-Lactid) von kleiner 0.3%.
- einem Molekulargewicht von größer 80 000 Dalton.

Bevorzugte Komponente ii ist beispielsweise NatureWorks® 4020 oder 4042D (Polylactid der Fa. NatureWorks).

Als Komponente iii ist ein Epoxidgruppen-haltiges Copolymer auf Basis Styrol, Acrylsäureester und/oder Methacrylsäureester geeignet. Die Epoxidgruppen tragenden Einheiten sind vorzugsweise Glycidyl(meth)acrylate. Als vorteilhaft haben sich Copolymere mit einem Glycidylmethacrylat-Anteil von größer 20, besonders bevorzugt von größer 30 und insbesondere bevorzugt von größer 50 Gew.-% des Copolymers erwiesen wie sie beispielsweise von Fa. Johnson Polymer unter der Marke Joncryl® ADR 4368 vertrieben werden. Das mittlere Molekulargewicht der Polymere beträgt vorzugsweise 2000 bis 20.000, insbesondere 4000 bis 12.000.

Unter den Nukleierung mitteln iv) sind beispielsweise
- Talkum, Kreide, Ruß, Graphit, Calcium- oder Zinkstearat, Poly-D-Milchsäure, N,N'ethylen-bis-12-hydroxystearamid oder Polyglykolsäure
zu verstehen.

Diese Hilfsstoffe werden in einer Konzentration von 0.5 bis 3 Gew.-% bezogen auf das Gesamtgewicht der Komponenten i) und ii) eingesetzt.

Der Zusatz von Nukleierungsmitteln ist besonders vorteilhaft und wirkt sich bei der Herstellung der Schaumlagen positiv aus. Das fein dispergierte Nukleierungsmittel stellt eine Oberfläche zur Zellbildung dar, wodurch eine homogene Zellstruktur erreicht und die Schaumdichte beeinflusst werden kann.

Die erfindungsgemäßen biologisch abbaubaren Polyestermischungen enthalten üblicherweise von 5 bis 70 Gew.-%, bevorzugt von 10 bis 50 Gew.-%, besonders bevorzugt von 10 bis 30 Gew.-% Komponente i und von 30 bis 95 Gew.-%, bevorzugt von 50 bis 90 Gew.-%, besonders bevorzugt von 70 bis 90 Gew.-% Komponente ii, wobei sich die Gewichtsprozente jeweils auf das Gesamtgewicht der Komponenten i bis ii beziehen und zusammen 100 Gew.-% ergeben.

Komponente iii) wird in 0,1 bis 5 Gew.-%, bevorzugt in 0,1 bis 2 Gew.-%, und besonders bevorzugt in 0,2 bis 1 Gew.-%, bezogen auf das Gesamtgewicht der Komponenten i) bis ii), eingesetzt.

Die Herstellung der erfindungsgemäßen biologisch abbaubaren Polyestermischungen aus den einzelnen Komponenten kann nach bekannten Verfahren erfolgen (EP 792 309 und US 5,883,199).

Beispielsweise können alle Komponenten i, ii und iii in einem Verfahrensschritt in dem Fachmann bekannten Mischvorrichtungen, beispielsweise Knetern oder Extrudern bei erhöhten Temperaturen, beispielsweise von 120°C bis 250°C, gemischt und zur Reaktion gebracht werden. Die Reaktion wird bevorzugt in Gegenwart eines Radikalstarters durchgeführt.

Darüber hinaus kann das in der WO 2006/07815 beschriebene Verfahren zur Herstellung der biologisch abbaubaren Polyestermischungen herangezogen werden.

Hierzu wird in einem ersten Schritt 1 bis 50 Gew.-%, bevorzugt 5 - 35 Gew.-% Komponente iii mit 50 bis 99 Gew.-% und bevorzugt 65 bis 95 Gew.-% Komponente i bei Temperaturen von 110 bis 145°C - vorzugsweise 120 bis 140°C - zu einem Verzweigerbatch gemischt. Bei diesen Temperaturen wird ein homogener Blend erhalten, ohne dass es zu einem nennenswerten Molekulargewichtsaufbau käme. Der so erhaltene Verzweigerbatch lässt sich bei Raumtemperatur problemlos aufbewahren. In einem zweiten Schritt kann durch Zugabe des Verzweigerbatches zu Komponente ii und gegebenenfalls weiterer Komponente i die gewünschte Zusammensetzung eingestellt werden. Dieser Compoundierungsschritt wird bei 150 bis 250°C - vorzugsweise bei 160 bis 190°C - durchgeführt.

Zur Herstellung der Extrusionsschäume werden die Komponenten in einem Ein- oder Doppelschneckenextruder bei 160 bis 220°C vermischt. Bei diesen Temperaturen wird ein homogener Blend erhalten. Vorzugsweise bildet PLA (Komponente ii) eine kontinuierliche oder kokontinuierliche Phase aus.

Raster- und Transmissionselektroskopieaufnahmen zeigen, dass bei Verwendung eines Doppelschneckenextruders die diskontinuierliche Phase bestehend aus Komponente i Domänen mit einem Durchmesser kleiner 150 nm bildet. Hierdurch werden Zellwände mit Durchmessern kleiner 200 nm erreicht, in denen immer noch die diskontinuierliche Phase in der Matrix dispergiert sein kann. Hierdurch wird ein Aufreißen der Zellen während des Expansionsvorgangs vermieden. Dies wiederum führt zu hohen Anteilen an geschlossenen Zellen größer 70 %, insbesondere größer 80 % und besonders bevorzugt größer 90 %. Die niedrigen Zellwanddicken kleiner 200 nm führen außerdem zu Dichten kleiner 50 g/l und vorzugsweise kleiner 30 g/l.

In die Schmelze wird 1-25 Gew.-%, bevorzugt 1-15 Gew.-% Treibmittel eingetragen. Es werden physikalische Treibmittel eingesetzt um eine niedrige Schaumdichte zu gewährleisten. Beispiele geeigneter Treibmittel sind lineare Alkane mit bevorzugt 4-6 Kohlenstoffatomen, Stickstoff, Kohlendioxid, Ethanol, Dimethylether, Diethylether, Methylethylether sowie Kombinationen hiervon. Besonders bevorzugt sind Butan, Pentan, Stickstoff, und Kohlendioxid, insbesondere Kohlendioxid. Die Schmelze wird anschließend in einem zweiten Doppelschneckenextruder abgekühlt. Alternativ hierzu kann die Abkühlung in einem hinteren Segment des Einschneckenaufschmelzextruders durchgeführt werden. Bei den gewählten Temperaturen ist darauf zu achten, dass der Druck im Extruder ausreichend hoch ist um ein potenzielles frühzeitiges Aufschäumen im Extruder zu unterbinden. Wird eine Lochdüse verwendet erhält man Schaumstränge, die eine glatte, glänzende Oberfläche besitzen.

Alternativ hierzu kann eine ringförmige Düsengeometrie verwendet werden um schlauchförmige Schaumlagen zu erhalten. Die extrudierten schlauchförmigen Schaumlagen werden gekühlt, zum Beispiel mit Luft, mit einem Messer aufgeschnitten und die hierbei entstehenden glatten Schaumlagen auf einer Walze aufgerollt. Hierbei ist darauf zu achten, dass mit einer konstanten Geschwindigkeit abgerollt wird. Durch die Abwickelgeschwindigkeit kann die Schaumdichte beeinflusst werden. Außerdem ist bei der Extrusion und Aufwicklung darauf zu achten, dass die Schaumfolien eine homogenen Dickenverteilung aufweisen, da dies für den nachfolgenden Thermoformprozess von entscheidender Bedeutung ist.

Die extrudierten Schaumlagen können einer Thermoformapparatur durch kurzzeitiges und gleichmäßiges Erhitzen zum Beispiel mit einer Infrarot-Heizquelle auf 80-120°C, besonders bevorzugt 90-100°C erwärmt werden und per Vakuum, gegebenenfalls unter zusätzlicher Verwendung von Druckluft in einem Werkzeug zu einer definierten Form einer Schaumschale thermogeformt und anschließend zum Beispiel mit Luft abgekühlt werden.

Ein besonderes Anwendungsgebiet der biologisch abbaubaren Polyestermischungen mit verringerter Öl- und Wasseraufnahme betrifft die Verwendung zur Herstellung von Schaumlagen, zur Darstellung von geschäumten Verpackungen, wie thermogeformte Lebensmittelverpackungen.

### Beispiele:

### Anwendungstechnische Messungen:

Die Aufnahme von Öl, Wasser und Ethanol wurde wie folgt bestimmt:

Definierte Schaumstränge gleichen Durchmessers wurden an den Enden verschweißt, gewogen und mehrere Stunden bei Raumtemperatur bzw. bei 60°C in Öl bzw. Wasser gelagert. Die relative Gewichtszunahme der Stränge wurde bestimmt.

### Das Molekulargewicht Mₙ der teilaromatischen Polyester wurde wie folgt bestimmt:

15 mg der teilaromatischen Polyester wurden in 10 ml Hexafluoroisopropanol (HFIP) gelöst. Jeweils 125 µl dieser Lösung wurden mittels Gelpermeationschromatographie (GPC) analysiert. Die Messungen wurden bei Raumtemperatur durchgeführt. Für die Elution wurde HFIP + 0,05 Gew.-% Trifluoroessigsäure-Ka-Salz verwendet. Die Elutionsgeschwindigkeit betrug 0,5 ml/min. Dabei wurde folgende Säulenkombination verwendet (alle Säulen hergestellt von Fa. Showa Denko Ltd., Japan): Shodex® HFIP-800P (Durchmesser 8 mm, Länge 5 cm), Shodex® HFIP-803 (Durchmesser 8 mm, Länge 30 cm), Shodex® HFIP-803 (Durchmesser 8 mm, Länge 30 cm). Die teilaromatischen Polyester wurden mittels eines RI-Detektors (Differential-Refraktometrie) detektiert. Die Kalibrierung erfolgte mit eng verteilten Polymethylmethacrylat-Standards mit Molekulargewichten von Mₙ = 505 bis Mₙ = 2.740.000. Außerhalb dieses Intervalls liegende Elutionsbereiche wurden durch Extrapolation bestimmt.

Die Schmelztemperaturen der teilaromatischen Polyester wurden durch DSC Messungen mit einem Gerät Exstet DSC 6200R der Fa. Seiko bestimmt:
10 bis 15 mg der jeweiligen Proben wurden unter einer Stickstoffatmosphäre mit einer Aufheizrate von 20°C/min von -70°C auf 200°C aufgeheizt. Als Schmelztemperaturen der Proben wurden die Peaktemperaturen des dabei beobachteten Schmelzpeaks angegeben. Als Referenz wurde jeweils ein leerer Probentiegel verwendet.

Die Homogenität der Mischungen der Komponenten i, ii, und iii sowie der zum Vergleich hergestellten Mischungen wurde bestimmt, indem diese Mischungen bei 190°C jeweils zu Folien mit einer Dicke von 30 µm gepresst wurden. Der Anteil nicht dispergiert vorliegender Komponente ii in diesen Folien wurde durch Augenscheinnahme beurteilt.

Aus den biologisch abbaubaren Polyestermischungen wurden durch Extrusion und Verwendung einer ringförmigen Düse jeweils Schaumlagen mit einer Dicke von 2 bis 3 mm hergestellt.

Die Dichte wurde bestimmt, in dem die Schaumprobe gewogen und das Verdrängungsvolumen in Wasser bestimmt wurde.

Zur Bestimmung des Anteils geschlossener Zellen wurde ein Querschnitt des Schaumstrangs bzw. der Schaumlage mittels Elektronenmikroskopie analysiert. In einem rechteckigen Ausschnitt wurde der Anteil derjenigen Zellen bestimmt, der eine geschlossene Zellwandstruktur enthält.

Die Zellwandstärke und die Morphologie wurden mittels Transmissionselektronenmikroskopie und Rasterelektronenmikroskopie bestimmt.

### Einsatzstoffe:

### Komponente i:

- i-1:: Zur Herstellung des Polyesters i-1 wurden 87,3 kg Dimethylterephthalat, 80,3 kg Adipinsäure, 117 kg 1,4-Butandiol und 0,2 kg Glycerin zusammen mit 0,028 kg Tetrabutylorthotitanat (TBOT) gemischt, wobei das Molverhältnis zwischen Alkoholkomponenten und Säurekomponente 1,30 betrug. Das Reaktionsgemisch wurde auf eine Temperatur von 180°C erhitzt und bei dieser Temperatur 6h lang umgesetzt. Anschließend wurde die Temperatur auf 240°C erhöht und die überschüssige Dihydroxyverbindung unter Vakuum über einen Zeitraum von 3h abdestilliert. Anschließend wurden bei 240°C 0,9 kg Hexamethylendiisocyanat innerhalb 1 h langsam zudosiert.

Der so erhaltene Polyester i-1 wies eine Schmelztemperatur von 119°C und ein Molekulargewicht (Mₙ) von 23000 g/mol auf (entspricht Ecoflex® FBX 7011, hergestellt von BASF Aktiengesellschaft).

### Komponente ii:

- ii-1:: aliphatischer Polyester, Polylactid Natureworks® 4042D der Fa. NatureWorks.

### Komponente iii:

- iii-1:: Joncryl® ADR 4368 der Fa. Johnson Polymer.

### Weitere Komponenten:

### Nukleierungsmittel: Talkum, Kreide

Es wurde jeweils eine Lochdüse verwendet um Schaumstränge zu erhalten.

### Beispiele 1 bis 4

| Beispiel | Komponente i | Komponente ii | Komponente iii | Additiv | Treibmittel |
|---|---|---|---|---|---|
| Bsp-1 | 19 Gew.-% (Ecoflex® FBX 7011) | 80 Gew.-% PLA 4042D | 0 Gew.-% Joncryl 4368 | 1 Gew.-% CaCO₃ | 10 Gew.-% CO₂ |
| Bsp-2 | 18,8 Gew.-% (Ecoflex® FBX 7011) | 80 Gew.-% 80 Gew.-% PLA 4042D | 0,2 Gew.-% Joncryl 4368 | 1 Gew.-% CaCO₃ | 10 Gew.-% CO₂ |

| Beispiel | Dichte g/l | Anteil geschlossener Zellen | Zellwandstärke in nm | Aussehen |
|---|---|---|---|---|
| Bsp-1 | 27 | > 80 | < 200 nm | Glatte glänzende Oberfläche, gute Haptik |
| Bsp-2 | 34 | > 90 | < 180 nm | Glatte glänzende Oberfläche, gute Haptik |

Beispiel 2 zeigt, dass durch den Einsatz des Kompatibilizers der Anteil an geschlossenen Zellen im Vergleich zu dem ohnehin schon sehr guten Beispiel 1 nochmals gesteigert werden kann.

### Aufnahme von Wasser:

| Beispiel | Temperatur / °C | Rel. Aufnahme nach 4 h in % |
|---|---|---|
| Bsp-1 | 23 | 43 |
| Bsp-1 | 60 | 129 |
| Bsp-2 | 23 | 1 |
| Bsp-2 | 60 | 12 |

### Aufnahme von Olivenöl:

| Beispiel | Temperatur / °C | Rel. Aufnahme nach 4 h in % |
|---|---|---|
| Bsp-1 | 23 | 111 |
| Bsp-1 | 60 | 82 |
| Bsp-2 | 23 | 16 |
| Bsp-2 | 60 | 16 |

### Aufnahme von Ethanol:

| Beispiel | Temperatur / °C | Rel. Aufnahme nach 4 h in % |
|---|---|---|
| Bsp-1 | 23 | 147 |
| Bsp-1 | 60 | 429 |
| Bsp-2 | 23 | 38 |
| Bsp-2 | 60 | 189 |

Beispiel 2 zeigt eindrucksvoll, dass die Wasser- und Ölaufnahme durch den erfindungsgemäßen Kompatibilizer drastisch reduziert werden kann.

## Patentansprüche

1. Schaumlage auf Basis einer biologisch abbaubaren Polyestermischung, umfassend
i) 70 bis 5 Gew.-%, bezogen auf das Gesamtgewicht der Komponenten i) bis ii), mindestens eines Polyesters auf Basis von aliphatischen und aromatischen Dicarbonsäuren und aliphatischen Dihydroxyverbindung und
ii) 30 bis 95 Gew.-%, bezogen auf das Gesamtgewicht der Komponenten i) bis ii), Polylactid, und
iii) 0,1 bis 5 Gew.-%, bezogen auf das Gesamtgewicht der Komponenten i) bis ii), eines Epoxidgruppen-haltigen Copolymers auf Basis Styrol, Acrylsäureester und/oder Methacrylsäureester, und
iv) 0,5 bis 3 Gew.%, bezogen auf das Gesamtgewicht der Komponenten i) bis ii), eines Nukleierungsmittels, und
v) 0 bis 50 Gew.-% anorganischer oder organischer Füllstoff.

2. Schaumlage nach Anspruch 1, wobei Komponente i) aufgebaut ist aus:
A) einer Säurekomponente aus
a1) 30 bis 99 mol-% mindestens einer aliphatischen oder mindestens einer cycloaliphatischen Dicarbonsäure oder deren esterbildende Derivate oder Mischungen davon
a2) 1 bis 70 mol-% mindestens einer aromatischen Dicarbonsäure oder deren esterbildendem Derivat oder Mischungen davon und
a3) 0 bis 5 mol-% einer sulfonatgruppenhaltigen Verbindung,
wobei die Molprozente der Komponenten a1) bis a3) zusammen 100 % ergeben und
B) einer Diolkomponente aus mindestens einem C₂-bis C₁₂-Alkandiol oder einem C₅- bis C₁₀-Cycloalkandiol oder Mischungen davon
und gewünschtenfalls darüber hinaus eine oder mehrere Komponenten ausgewählt aus
C) einer Komponente ausgewählt aus
c1) mindestens einer Etherfunktionen enthaltenden Dihydroxyverbindung der Formel I
HO-[(CH₂)ₙ-O]ₘ-H (I)
in der n für 2, 3 oder 4 und m für eine ganze Zahl von 2 bis 250 stehen,
c2) mindestens einer Hydroxycarbonsäure der Formel IIa oder IIb 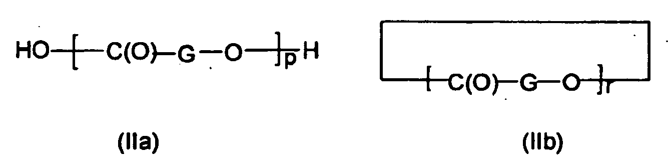 in der p eine ganze Zahl von 1 bis 1500 und r eine ganze Zahl von 1 bis 4 bedeuten, und G für einen Rest steht, der ausgewählt ist aus der Gruppe bestehend aus Phenylen, -(CH₂)_{q}-, wobei q eine ganze Zahl von 1 bis 5 bedeutet, -C(R)H- und -C(R)HCH₂, wobei R für Methyl oder Ethyl steht
c3) mindestens einem Amino-C₂- bis C₁₂-alkanol oder mindestens einem Amino-C₅-bis C₁₀-cycloalkanol oder Mischungen davon
c4) mindestens einem Diamino-C₁- bis C₈-Alkan
c5) mindestens einem 2,2'-Bisoxazolins der allgemeinen Formel **III** 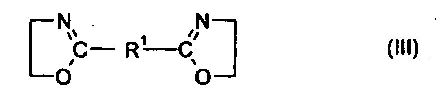 wobei R¹ eine Einfachbindung, eine (CH₂)_{z}-Alkylengruppe, mit z = 2, 3 oder 4, oder eine Phenylengruppe bedeutet
c6) mindestens einer Aminocarbonsäure ausgewählt aus der Gruppe, bestehend aus den natürlichen Aminosäuren, Polyamiden, erhältlich durch Polykondensation einer Dicarbonsäure mit 4 bis 6 C-Atomen und einem Diamin mit 4 bis 10 C-Atomen, Verbindungen der Formeln IVa und IVb 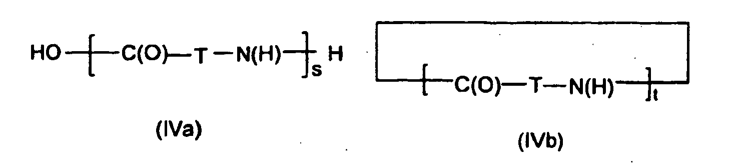 in der s eine ganze Zahl von 1 bis 1500 und t eine ganze Zahl von 1 bis 4 bedeuten, und T für einen Rest steht, der ausgewählt ist aus der Gruppe bestehend aus Phenylen, -(CH₂)ᵤ-, wobei u eine ganze Zahl von 1 bis 12 bedeutet, -C(R²)H- und -C(R²)HCH₂, wobei R² für Methyl oder Ethyl steht,
und Polyoxazolinen mit der wiederkehrenden Einheit V 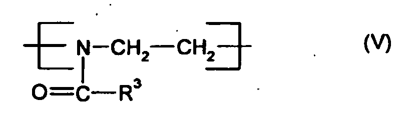 in der R³ für Wasserstoff, C₁-C₆-Alkyl, C₅-C₈-Cycloalkyl, unsubstituierten oder mit C₁-C₄-Alkylgruppen bis zu dreifach substituiertes Phenyl oder für Tetrahydrofuryl steht,
oder Mischungen aus c1) bis c6)
und
D) einer Komponente ausgewählt aus
d1) mindestens einer Verbindung mit mindestens drei zur Esterbildung befähigten Gruppen,
d2) mindestens eines Isocyanates
d3) mindestens eines Divinylethers
oder Mischungen aus d1) bis d3).

3. Schaumlage nach Anspruch 2, wobei in Komponente i):
• die aliphatische oder cycloaliphatische Dicarbonsäure (Komponente a1)) Bernsteinsäure, Adipinsäure oder Sebacinsäure, deren Ester bildende Derivate oder Mischungen davon bedeutet;
• die aromatische Dicarbonsäure (Komponente a2)) Terephthalsäure oder deren Ester bildende Derivate bedeutet, und
• die Diolkomponente (Komponente B) 1,4-Butandiol oder 1,3-Propandiol bedeutet.

4. Schaumlage nach den Ansprüchen 1 bis 3, wobei Komponente ii) ein Polylactid mit einer Schmelzvolumenrate (MVR bei 190°C und 2.16 kg nach ISO 1133) von 2 bis 9 ml/10 Minuten ist.

5. Schaumlage nach den Ansprüchen 1 bis 4, wobei Komponente iii) einen EpoxidAnteil von größer 30 % aufweist.

6. Schaumlage nach den Ansprüchen 1 bis 5 mit einer Dichte von kleiner 50 g/l.

7. Schaumlage nach den Ansprüchen 1 bis 6 mit einem Anteil von geschlossenen Zellen von größer 70 %.

8. Schaumlage nach den Ansprüchen 1 bis 7 mit einer maximalen Wasseraufnahme bei 23°C und 4 Stunden von kleiner 10 Gew.-%.

9. Schaumlage nach den Ansprüchen 1 bis 6 umfassend
10 bis 30 Gew.-% Komponente i) und
70 bis 90 Gew.-% Komponente ii),
jeweils bezogen auf das Gesamtgewicht der Komponenten i) bis ii).

10. Schaumlage nach Anspruch 1, wobei Komponente ii) eine kontinuierliche oder kokontinuierliche Phase ausbildet.

11. Schaumlage nach den Ansprüchen 1 bis 10 mit einer Schichtdicke von 0,5 bis 100 cm.

12. Schaumlage nach den Ansprüchen 1 bis 11 umfassend 0,1 bis 2 Gew.-% Komponente iii), bezogen auf das Gesamtgewicht der Komponenten i) bis ii).

13. Schaumlage nach den Ansprüchen 1 bis 12, die als Füllstoff v) 5 bis 50 Gew.-% bezogen auf die Komponenten i) und ii) eines nachwachsenden Polymers enthalten.

14. Verfahren zur Herstellung einer Schaumlage gemäß den Ansprüchen 1 bis 13, **dadurch gekennzeichnet dass**
a) eine biologisch abbaubaren Polyestermischung, umfassend
i) 70 bis 5 Gew.-%, bezogen auf das Gesamtgewicht der Komponenten i) bis ii), mindestens eines Polyesters auf Basis von aliphatischen und aromatischen Dicarbonsäuren und aliphatischen Dihydroxyverbindung und
ii) 30 bis 95 Gew.-%, bezogen auf das Gesamtgewicht der Komponenten i) bis ii), Polylactid, und
iii) 0,1 bis 5 Gew.%, bezogen auf das Gesamtgewicht der Komponenten i) bis ii), eines Epoxidgruppen-haltigen Copolymers auf Basis Styrol, Acrylsäureester und/oder Methacrylsäureester, und
iv) 0,5 bis 3 Gew.-%, bezogen auf das Gesamtgewicht der Komponenten i) bis ii), eines Nukleierungsmittels, und
v) 0 bis 50 Gew.-% anorganischer oder organischer Füllstoff im Extruder bei 160 bis 220°C gemischt wird;
b) 1 bis 25 Gew.-% eines physikalischen Treibmittels unter Druck eingegast wird und
c) abgekühlt wird und zur Schaumlage ausextrudiert und gegebenenfalls in einer Thermoformapparatur thermogeformt wird.

15. Verfahren nach Anspruch 14, wobei als Treibmittel Kohlendioxid eingesetzt wird.

16. Verwendung der Schaumlagen gemäß den Ansprüchen 1 bis 13 zur Wärme- und Schalldämmung.

## Claims

1. A foam ply based of a biodegradable polyester mixture, comprising
i) from 70 to 5% by weight, based on the total of components at to ii), of at least one polyester based on aliphatic and aromatic dicarboxylic acids and on aliphatic dihydroxy compound, and
ii) from 30 to 95% by weight, based on the total of components i) to ii), of polylactide, and
iii) from 0.1 to 5% by weight, based on the total weight of components i) to ii), of a copolymer which comprises epoxy groups and is based on styrene, acrylate, and/or methacrylates, and
iv) from 0.5 to 3% by weight, based on the total of components i) to ii), of a nucleating agent, and
v) from 0 to 50% by weight of inorganic or organic tiller.

2. The foam ply according to claim 1, where component i) is composed of:
A) an acid component composed of
a1) from 30 to 99 mol% of at least one aliphatic, or at least one cycloaliphatic, dicarboxylic acid, or its ester-forming derivatives, or a mixture of these
a2) from 1 to 70 mol% of at least one aromatic dicarboxylic acid, or its ester-forming derivative, or a mixture of these, and
a3) from 0 to 5 mol% of a compound comprising sulfonate groups,
where the molar percentages of components a1) to a3) together give 100%, and
B) a diol component composed of at least one C₂-C₁₂ alkanediol or one C₅-C₁₀ cycloalkanediol, or a mixture of these,
and, if desired, also one or more components selected from
C) a component selected from
c1) at least one dihydroxy compound comprising ether functions and having the formula I
HO-[(CH₂)ₙ-O]ₘ-H (I)
where n is 2, 3 or 4 and m is a whole number from 2 to 250,
c2) at least one hydroxycarboxylic acid of the formula IIa or IIb 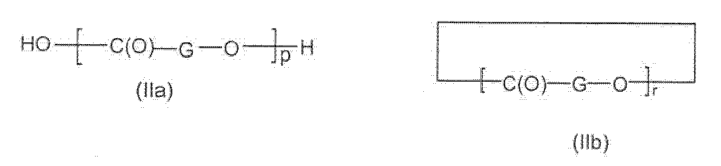 where p is a whole number from 1 to 1500 and r is a whole number from 1 to 4, and G is a radical selected from the group consisting of phenylene, -(CH₂)_{q}-, where q is a whole number from 1 to 5, -C(R)H- and - C(R)HCH₂, where R is methyl or ethyl,
c3) at least one amino-C₂-C₁₂ alkanol, or at least one amino-C₅-C₁₀, cycloalkanol, or a mixture of these,
c4) at least one diamino-C₁-C₈ alkane,
c5) at least one 2,2'-bisoxazoline of the formula III 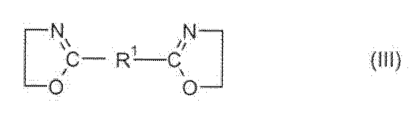 where R¹ is a single bond, a (CH₂)_{z}-alkylene group, where z = 2, 3 or 4, or a phenylene group,
c6) at least one aminocarboxylic acid selected from the group consisting of the naturally occurring amino acids, polyamides obtainable by polycondensing a dicarboxylic acid having from 4 to 6 carbon atoms with a diamine having from 4 to 10 carbon atom, compounds of the formulae IVa and IVb 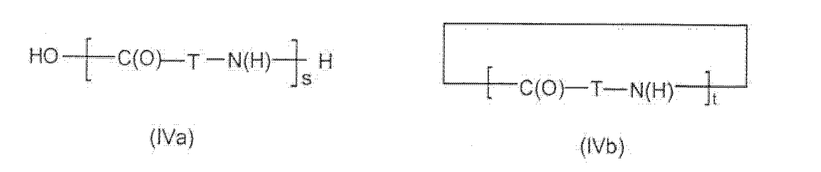 where s is a whole number 1 to 1500 and t is a whore number from 1 to 4, and T is a radical selected from the group consisting of phenylene, -(CH₂)ᵤ-, where u is a whale number from 1 to 12, -C(R²)H- and -C(R²)HCH₂-, where R² is methyl or ethyl,
and polyoxazolines having the repeat unit V 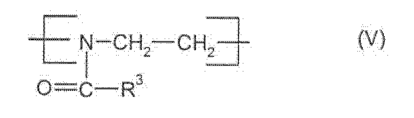 where R³ is hydrogen, C₁-C₆-alkyl, C₅-C₈-cycloalkyl, phenol, either unsubstituted or with up tao three C₁-C₄-alkyl substituents, or tetrahydrofuryl,
or a mixture composed of c1) to c6),
and of
D) a component selected from
d1) at least one compound having at least three groups capable of ester formation,
d2) at least one isocyanate,
d3) at least one divinyl ether,
or a mixture composed of d1) to d3).

3. The foam ply according to claim 2, where, in component i),
• the aliphatic or cycloaliphatic dicarboxylic acid (component a1)) is succinic acid, adipic acid, or acid, ester-forming derivatives thereof, or a mixture of these;
• the aromatic dicarboxylic acid (component a2)) is terephthalic acid or ester-forming derivatives thereof, and
• the diol component (component B) is 1,4-or 1,3-propanediol.

4. The foam ply according to claims 1 to 3, where component ii) is a polylactide whose melt volume rate (MVR for 190°C and 2.16 kg to ISO 1133) is from 2 to 9 ml/10 minuted.

5. The foam ply according to claims 1 to 4, where component iii) has more than 30% epoxy consent.

6. The foam ply according to claims 1 to 5 whose density is smaller than 50 g/l.

7. The foam ply according to claims 1 to 6 whose content of closed cells is greater than 70%.

8. The foam ply according to claims 1 to 7 whose maximum water absorption for 23°C and 4 hours is smaller than 10% by weight.

9. The foam ply according to claims 1 to 6 comprising from 10 to 30% by weight of component i), and from 70 to 90% by weight of component ii), based in each case on the total weight of components i) to ii).

10. The foam ply according to claim 1, where component ii) forms a continuous or cocontinuous phase.

11. The foam ply according to claims 1 to 10 having a layer thickness of from 0.5 to 100 cm.

12. The foam ply according to claims 1 to 11, comprising from 0.1 to 2% by weight of component iii), based on the total weight of components i) to ii).

13. The foam ply according to claims 1 to 12, comprising, as filler v), from 5 to 50% by weight, based on components i) and ii), of a renewable polymer.

14. A process for production of a foam ply according to claims 1 to 13, which comprises
a) mixing, in an extruder at from 160 to 220°C, a biodegradable polyester mixture, comprising
i) from 70 to 5% by weight, based on the total weight of components i) to ii), of at least one polyester based on aliphatic and aromatic dicarboxylic acids and on aliphatic dihydroxy compound, and
ii) from 30 to 95% by weight, based on the total weight of components i) to ii), of polylactide, and
iii) from 0.1 to 5% by weight, based on the total weight of components i) to ii), of a copolymer which comprises epoxy groups and is based on styrene, acrylates, and/or methacrylates, and
iv) from 0.5 to 3% by weight, based on the total weight of components i) to ii), of a nucleating agent, and
v) from 0 to 50% by weight of inorganic or organic filler;
b) injecting from 1 to 25% by weight of a physical blowing agent in the form of a gas under pressure, and
c) cooling and extruding to give the foam ply and, if appropriate, thermoforming in a thermoforming apparatus.

15. The process according to claim 14, where carbon dioxide is used as blowing agent.

16. The use of the foam plies according to claims 1 to 13 for thermal and acoustic insulation.

## Revendications

1. Couche de mousse à base d'un mélange de polyesters biologiquement dégradable, comprenant
i) 70 à 5 % en poids, par rapport au poids total des composants i) et ii), d'au moins un polyester à base d'acides dicarboxyliques aliphatiques et aromatiques et d'un composé dihydroxylé aliphatique et
ii) 30 à 95 % en poids, par rapport au poids total des composants i) et ii), de polylactide, et
iii) 0,1 à 5 % en poids, par rapport au poids total des composants i) et ii), d'un copolymère contenant des groupes époxy, à base de styrène, ester d'acide acrylique et/ou ester d'acide méthacrylique, et
iv) 0,5 à 3 % en poids, par rapport au poids total des composants i) et ii), d'un agent de nucléation, et
v) 0 à 50 % en poids de charge organique ou inorganique.

2. Couche de mousse selon la revendication 1, dans laquelle le composant i) est formé à partir :
A) d'un composant acide constitué
a1) de 30 à 99 % en moles d'au moins un acide dicarboxylique aliphatique ou d'au moins un acide dicarboxylique cycloaliphatique ou de leurs dérivés formant des esters ou de mélanges de ceux-ci
a2) de 1 à 70 % en moles d'au moins un acide dicarboxylique aromatique ou d'un dérivé d'un tel acide formant des esters ou de mélanges de ceux-ci et
a3) de 0 à 5 % en moles d'un composé contenant des groupes sulfonate,
le pourcentage en moles des composants a1) à a3) ensemble étant égal à 100 % et
B) d'un composant diol à base d'au moins un alcanediol en C₂-C₁₂ ou d'un cycloalcanediol en C₅-C₁₀ ou de mélanges de ceux-ci
et si on le désire en outre d'un ou plusieurs composants choisis parmi
C) un composant choisi parmi
c1) au moins un composé dihydroxylé contenant des fonctions éther, de formule I
HO-[(CH₂)ₙ-O]ₘ-H (I)
dans laquelle n représente 2, 3 ou 4 et m représente un nombre entier valant de 2 à 250,
c2) au moins un acide hydroxycarboxylique de formule IIa ou IIb 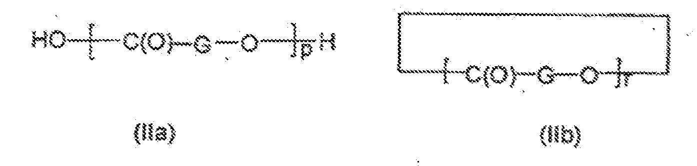 formules dans lesquelles p représente un nombre entier valant de 1 à 1500 et r représente un nombre entier valant de 1 à 4, et G représente un radical qui est choisi dans l'ensemble constitué par les groupes phénylène, -(CH₂)_{q}-, q représentant un nombre entier valant de 1 à 5, -C(R)H- et -C(R)HCH₂, R représentant le groupe méthyle ou éthyle
c3) au moins un amino-alcanol en C₂-C₁₂ ou au moins un amino-cycloalcanol en C₅-C₁₀ ou des mélanges de ceux-ci
c4) au moins un diamino-alcane en C₁-C₈
c5) au moins une 2,2'-bisoxazoline de formule générale III 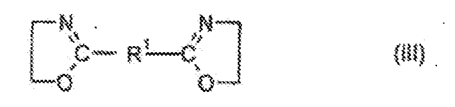 dans laquelle R¹ représente une liaison simple, un groupe (CH₂)_{z}-alkylène, où z = 2, 3 ou 4, ou un groupe phénylène
c6) au moins un acide aminocarboxylique choisi dans le groupe constitué par les acides aminés naturels, les polyamides, pouvant être obtenu par polycondensation d'un acide dicarboxylique ayant de 4 à 6 atomes de carbone et d'une diamine ayant de 4 à 10 atomes de carbone, des composés de formules IVa et IVb 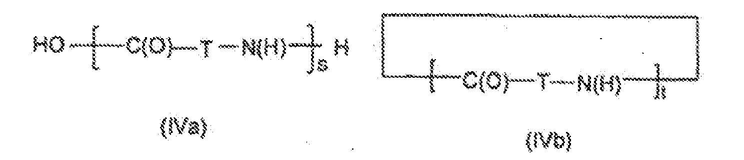 dans lesquelles s représente un nombre entier valant de 1 à 1500 et t représente un nombre entier valant de 1 à 4, et T représente un radical qui est choisi dans l'ensemble constitué par les groupes phénylène, -(CH₂)ᵤ-, u représentant un nombre entier valant de 1 à 12, -C(R²)H- et -C(R²)HCH₂, R² représentant le groupe méthyle ou éthyle,
et des polyoxazolines comportant le motif répétitif V 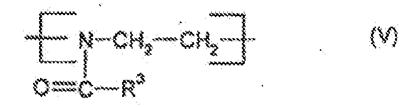 dans lequel R³ représente un atome d'hydrogène, un groupe alkyle en C₁-C₅,
cycloalkyle en C₅-C₈, un groupe phényle non substitué ou jusqu'à trois fois substitué par des groupes alkyle en C₁-C₄ ou représente le groupe tétrahydrofuryle,
ou des mélanges de c1) à c6)
et
D) un composant choisi parmi
d1) au moins un composé comportant au moins trois groupes aptes à la formation d'esters,
d2) au moins un isocyanate
d3) au moins un éther divinylique
ou des mélanges de d1) à d3).

3. Couche de mousse selon la revendication 2, dans laquelle, dans le composant i) :
• l'acide dicarboxylique aliphatique ou cycloaliphatique (composant a1)) représente l'acide succinique, l'acide adipique ou l'acide sébacique, leurs dérivés formant des esters ou des mélanges de ceux-ci ;
• l'acide dicarboxylique aromatique (composant a2)) représente l'acide téréphtalique ou ses dérivés formant des esters, et
• le composant diol (composant B) représente le 1,4-butanediol ou le 1,3-propanediol.

4. Couche de mousse selon les revendications 1 à 3, dans laquelle le composant ii) est un polylactide ayant une indice de fluidité à chaud (MVR à 190 °C et 2,16 kg selon ISO 1133) de 2 à 9 ml/10 minutes.

5. Couche de mousse selon les revendications 1 à 4, dans laquelle le composant iii) présente une teneur en époxyde de plus de 30 %.

6. Couche de mousse selon les revendications 1 à 5, ayant une densité inférieure à 50 g/l.

7. Couche de mousse selon les revendications 1 à 6, ayant une proportion de cellules fermées de plus de 70 %.

8. Couche de mousse selon les revendications 1 à 7, ayant une absorption maximale d'eau à 23 °C et pendant 4 heures de moins de 10 % en poids.

9. Couche de mousse selon les revendications 1 à 6, comprenant
10 à 30 % en poids de composant i) et
70 à 90 % en poids de composant ii),
chaque fois par rapport au poids total des composants i) et ii).

10. Couche de mousse selon la revendication 1, dans laquelle le composant ii) forme une phase continue ou discontinue.

11. Couche de mousse selon les revendications 1 à 10, ayant une épaisseur de couche de 0,5 à 100 cm.

12. Couche de mousse selon les revendications 1 à 11, comprenant de 0,1 à 2 % en poids de composant iii), par rapport au poids total des composants i) et ii).

13. Couche de mousse selon les revendications 1 à 12, qui contient en tant que charge v) 5 à 50 % en poids, par rapport aux composants i) et ii), d'un polymère renouvelable.

14. Procédé pour la production d'une couche de mousse selon les revendications 1 à 13, **caractérisé en ce que**
a) on mélange dans l'extrudeuse, à une température de 160 à 220 °C, un mélange de polyesters biologiquement dégradable, comprenant
i) 70 à 5 % en poids, par rapport au poids total des composants i) à ii), d'au moins un polyester à base d'acides dicarboxyliques aliphatiques et aromatiques et d'un composé dihydroxylé aliphatique et
ii) 30 à 95 % en poids, par rapport au poids total des composants i) et ii), de polylactide, et
iii) 0,1 à 5 % en poids, par rapport au poids total des composants i) et ii), d'un copolymère contenant des groupes époxy, à base de styrène, ester d'acide acrylique et/ou ester d'acide méthacrylique, et
iv) 0,5 à 3 % en poids, par rapport au poids total, des composants i) et ii), d'un agent de nucléation, et
v) 0 à 50 % en poids de charge organique on inorganique ;
b) on introduit sous forme de gaz sous pression 1 à 25 % en poids d'un agent d'expansion physique et
c) on refroidit et on décharge par extrusion le mélange en la couche de mousse et éventuellement on la soumet à un thermoformage dans un appareil de thermoformage.

15. Procédé selon la revendication 14, dans lequel on utilise comme agent d'expansion le dioxyde de carbone.

16. Utilisation des couches de mousse selon les revendications 1 à 13 pour l'isolation phonique et thermique.
